# FASCICULE DE BREVET EUROPEEN

(11) **EP 3 093 523 B1**
(45) Date de publication et mention de la délivrance du brevet: **20.03.2019**
(21) Numéro de dépôt: 16168811.4
(22) Date de dépôt: 09.05.2016
(51) Int. Cl.: F16F 15/14

(54) **DISPOSITIF D'AMORTISSEMENT D'OSCILLATIONS DE TORSION**
VORRICHTUNG ZUR TORSIONSSCHWINGUNGSDÄMPFUNG
DEVICE FOR DAMPING TORSIONAL OSCILLATIONS

(30) Priorité: 12.05.2015 FR 1554210
(43) Date de publication de la demande: 16.11.2016
(73) Titulaire: Valeo Embrayages, 80009 Amiens Cedex 2 (FR)
(72) Inventeur: Verhoog, Roel, 60190 Gournay sur Aronde (FR)
(74) Mandataire: Cardon, Nicolas

(56) Documents cités:
- WO-A2-2011/076169
- FR-A1- 2 990 734
- FR-A1- 3 009 593
- JP-B2- 3 434 040

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un convertisseur de couple hydrodynamique, ce dernier comprenant un volume recevant du liquide dans lequel est placé le dispositif d'amortissement d'oscillations de torsion.

Un tel dispositif d'amortissement d'oscillations de torsion met classiquement en oeuvre un support et une ou plusieurs masses pendulaires mobiles par rapport à ce support, le déplacement par rapport au support des masses pendulaires étant guidé par des organes de roulement coopérant d'une part avec des pistes de roulement solidaires du support, et d'autre part avec des pistes de roulement solidaires des masses pendulaires. Chaque masse pendulaire comprend par exemple deux masselottes pendulaires rivetées entre elles et prenant en sandwich le support. Le support et les masselottes pendulaires sont alors plongés dans le liquide, qui est par exemple de l'huile.

Il est connu de prévoir des éléments en saillie définissant des plots de friction entre une masselotte pendulaire et le support. Chaque plot s'étend alors exclusivement depuis une masselotte pendulaire ou depuis le support, ce qui peut s'avérer complexe à réaliser.

On connait encore du brevet JP 3 434 040 un dispositif d'amortissement d'oscillations de torsion avec des masses pendulaires présentant chacune un plot de forme sphérique venant axialement en contact avec un plot de forme sphérique ménagé sur un volant axialement en regard de cette masse pendulaire. On connait aussi les dispositifs d'amortissement d'oscillation de torsion avec des masses pendulaires des documents FR2990734A1, WO2011/076169A2 présentant des bossages sur la surface du support, et/ou des masselottes.

Il existe un besoin pour améliorer encore le contact entre une masse mobile et son support lorsque ces derniers font partie d'un dispositif, pendulaire ou non, d'amortissement d'oscillations de torsion pour convertisseur de couple hydrodynamique.

L'invention a pour but de répondre à ce besoin et elle y parvient, selon l'un de ses aspects, à l'aide d'un dispositif d'amortissement d'oscillations de torsion pour convertisseur de couple hydrodynamique, comprenant :
- un support mobile en rotation autour d'un axe, et
- au moins une masse mobile par rapport au support, le déplacement de la masse par rapport au support étant guidé, et la masse étant axialement décalée par rapport au support,
la masse portant au moins un premier relief et le support portant au moins un deuxième relief, le premier et le deuxième reliefs étant aptes à venir en contact l'un avec l'autre lors du déplacement de la masse par rapport au support de manière à établir un contact axial entre la masse et le support.

Selon cette invention, le contact axial entre le support et la masse s'effectue via des portions en relief de ces dernières. Le plot selon l'art antérieur est alors remplacé par la coopération entre un premier relief porté par la masse et un deuxième relief porté par le support.

Chaque premier et deuxième relief peut avoir une forme différente d'une portion de sphère.

Avantageusement, le premier et le deuxième reliefs sont ménagés sur la masse et sur le support de telle sorte que, pour au moins une position de la masse par rapport au support dans laquelle le premier relief et le deuxième relief sont en contact l'un avec l'autre, ce contact s'effectue entre des portions respectives du premier relief et du deuxième relief s'étendant respectivement selon un axe, ces deux axes étant sécants. Les axes précités peuvent former des axes longitudinaux pour lesdites portions respectives du premier relief et du deuxième relief.

En variante, ce contact peut s'effectuer via des portions respectives du premier relief et du deuxième relief s'étendant respectivement selon un axe, ces axes étant parallèles. Les portions du premier relief et du deuxième relief sont alors des bossages orientés parallèlement, par exemple.

Un contact entre de telles portions s'étendant selon des axes sécants permet de résoudre le problème lié à une valeur importante de largeur du contact entre la masse et le support. En effet, lorsque la masse se déplace par rapport au support pour filtrer des oscillations de torsion, le frottement se produisant au niveau du contact entre cette masse et ce support tend à essuyer l'huile. En conséquence, une zone sèche est créée entre le support et cette masse, ce qui augmente l'usure de ces pièces et réduit les performances de filtrage apportées par le dispositif. Une solution envisageable serait de réduire autant que possible la largeur du contact formée entre le premier relief et le deuxième relief, ou de réduire la largeur du contact formé par le plot selon l'art antérieur, mais cette solution a pour inconvénient d'augmenter de façon importante la pression de contact alors exercée sur lesdits reliefs ou sur ledit plot.

Les orientations précitées des portions du premier et du deuxième reliefs venant en contact permettent alors de réduire la largeur du contact et donc le problème d'essuyage de l'huile au niveau de ce contact, tout en conservant des valeurs de pression de contact acceptables lorsque ce contact existe. Le risque précité d'apparition d'une zone sèche entre le support et la masse est alors réduit.

Lors de ce contact, les axes mentionnés ci-dessus peuvent être perpendiculaires.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « solidaire » signifie « rigidement couplé »,
- dans le cas où le dispositif est de type pendulaire, la position de repos du dispositif est celle dans laquelle les masses pendulaires sont soumises à une force centrifuge, mais non à des oscillations de torsion provenant des acyclismes du moteur thermique.

Chacun du premier relief et du deuxième relief peut s'étendre axialement en direction de l'autre relief. Le premier relief est par exemple porté par une face de la masse axialement en regard d'un côté du support, et ce premier relief s'étend axialement en direction de ce côté. Le deuxième relief est alors porté par un des côtés du support et s'étend axialement en direction de la face de la masse portant le premier relief.

La masse présente par exemple plusieurs positions distinctes dans chacune desquelles elle est en contact axial avec le support. Dans ce cas, chaque contact axial peut ou non s'effectuer via des portions respectives du premier relief et du deuxième relief s'étendant respectivement selon des axes sécants, notamment perpendiculaires. Le premier et le deuxième relief peuvent alors être ménagés sur la masse et le support de telle sorte que, pour toute position de la masse par rapport au support dans laquelle le premier relief et le deuxième relief sont en contact l'un avec l'autre, ce contact s'effectue entre des portions respectives du premier relief et du deuxième relief s'étendant respectivement selon un axe, ces deux axes étant sécants, étant notamment perpendiculaires.

Le premier relief peut être ménagé de façon continue sur la masse, et s'étendre de façon rectiligne. Le deuxième relief peut être ménagé de façon continue sur le support, et s'étendre de façon rectiligne.

Dans tout ce qui précède, le déplacement de la masse peut être guidé de manière à ce que cette dernière décrive une trajectoire donnée sur un secteur angulaire limité autour de l'axe de rotation, et le deuxième relief porté par le support peut s'étendre sur tout ou partie de ce secteur angulaire limité. Le deuxième relief s'étend par exemple sur moins d'un mm.

Cette trajectoire peut être une translation autour d'un axe fictif parallèle à l'axe de rotation du support. En variante, cette trajectoire peut être une translation autour d'un axe fictif parallèle à l'axe de rotation du support, combinée à une rotation autour du centre de gravité de cette masse, un tel mouvement étant encore appelé « mouvement combiné », et divulgué par exemple pour une masselotte pendulaire par la demande DE 10 2011 086 532.

Dans tout ce qui précède, l'un du premier et du deuxième relief est une nervure et l'autre du premier et du deuxième relief est formé par deux nervures entre lesquelles est ménagée une rainure. La rainure peut ainsi former un canal constituant une réserve d'huile.

La rainure peut s'étendre selon la trajectoire de la masse, sur tout ou partie de ce secteur angulaire limité, de manière à créer un effet de sustentation lors du déplacement de la masse par rapport au support. La rainure s'étend par exemple sensiblement orthoradialement.

Chaque nervure et la rainure peuvent s'étendre de façon rectiligne.

Le dispositif peut comprendre au moins une autre masse mobile par rapport au support, dont le déplacement par rapport au support est guidé, toutes les masses s'étendant axialement dans de mêmes plans.

Dans ce cas, chaque masse peut présenter un premier relief tel que ci-dessus, coopérant avec un deuxième relief tel que ci-dessus.

En variante, le support et l'autre masse peuvent être dépourvus de premier relief et de deuxième relief permettant un contact axial entre ce support et cette autre masse, notamment de premier relief et de deuxième relief permettant ce contact axial via des portions respectives du premier relief et du deuxième relief s'étendant respectivement selon un axe, ces deux axes étant sécants.

Dans tout ce qui précède, le premier relief peut être réalisé d'une seule pièce avec la masse portant ce relief, et le deuxième relief peut être réalisé d'une seule pièce avec le support.

Dans tout ce qui précède, chaque masse peut être guidée de manière à présenter une fréquence de résonance indépendante de l'ordre du moteur thermique du véhicule. Le dispositif comprend alors plusieurs masses guidées de manière à ce qu'elles présentent une telle même fréquence de résonance, un tel dispositif étant encore appelé « batteur », étant différent d'un pendule. Le batteur présente par exemple une fréquence de résonance fixe et unique. Les masses peuvent être uniquement reliées entre elles par des ressorts, un ressort étant interposé entre deux masses adjacentes circonférentiellement parlant.

En variante, chaque masse est guidée par rapport au support de manière à décrire un mouvement pendulaire, une telle masse étant appelée par la suite « masselotte pendulaire ». Le dispositif est alors appelé « pendule ».

Chaque masselotte pendulaire est par exemple disposée d'un côté du support et appariée via au moins un organe de liaison à une masselotte pendulaire disposée de l'autre côté du support. Des masselottes pendulaires ainsi appariées forment un corps pendulaire.

Au sein d'un même corps pendulaire, chaque masselotte pendulaire peut présenter un premier relief tel que défini ci-dessus et coopérant avec un deuxième relief du support. En variante, seule une masselotte pendulaire d'un corps pendulaire présente un tel premier relief.

Le dispositif présente par exemple plusieurs corps pendulaires, par exemple trois, quatre, six ou huit, et chaque corps pendulaire peut présenter des masselottes pendulaires interagissant via des premiers reliefs avec les deuxièmes reliefs du support. En variante, seules certains corps pendulaires, mais pas la totalité de ces derniers, présentent des masselottes pendulaires interagissant via des premiers reliefs avec des deuxièmes reliefs du support.

Le dispositif, lorsqu'il est de type pendulaire, peut alors présenter des organes de roulement, chaque organe de roulement étant associé à un corps pendulaire de manière à guider le mouvement de ce dernier par rapport au support. Le cas échéant, chaque corps pendulaire est associé à deux organes de roulement. Chaque organe de roulement peut présenter une section transversale circulaire, étant par exemple pleine ou creuse.

Chaque corps pendulaire peut ainsi comprendre deux organes de liaison appariant ses masselottes pendulaires et deux organes de roulement guidant le mouvement du corps pendulaire par rapport au support.

Chaque organe de roulement peut coopérer d'une part avec une piste de roulement solidaire du support, et d'autre part avec au moins une piste de roulement solidaire du corps pendulaire.

L'organe de roulement peut coopérer avec la piste de roulement solidaire du support et avec la piste de roulement solidaire du corps pendulaire uniquement via sa surface extérieure. Ainsi, une même portion de cette surface extérieure peut coopérer alternativement avec la piste de roulement solidaire du support et avec la piste de roulement solidaire du corps pendulaire lorsque l'organe de roulement se déplace.

La piste de roulement solidaire du corps pendulaire peut être ménagée par le ou l'un des organes de liaison du corps pendulaire. Dans ce cas, chaque organe de liaison coopère avec une seule piste de roulement solidaire du support et avec une seule piste de roulement solidaire du corps pendulaire. Chaque organe de roulement peut être uniquement sollicité en compression entre les pistes de roulement mentionnées ci-dessus. La piste de roulement solidaire du support et la piste de roulement solidaire du corps pendulaire et coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

En variante, chaque masselotte pendulaire définit une piste de roulement, de sorte que le corps pendulaire définit deux pistes de roulement distinctes. Chaque masselotte pendulaire du corps pendulaire présente par exemple une cavité recevant l'organe de roulement et une partie du bord de cette cavité forme la piste de roulement correspondante. La portion de l'organe de roulement disposée axialement entre la première et la deuxième masselotte pendulaire est reçue dans une cavité du support, cette cavité étant distincte de la fenêtre dans laquelle l'organe de liaison est reçu.

L'organe de roulement peut alors comprendre successivement :
- une portion disposée dans une cavité de la première masselotte pendulaire et coopérant avec la piste de roulement formée par une partie du bord de cette cavité,
- une portion disposée dans une cavité du support et coopérant avec la piste de roulement formée par une partie du bord de cette cavité, et
- une portion disposée dans une cavité de la deuxième masselotte pendulaire et coopérant avec la piste de roulement formée par une partie du bord de cette cavité.

Chaque corps pendulaire peut être muni d'un ou plusieurs organes d'amortissement de butée, permettant de réduire les chocs entre le corps pendulaire et le support à l'issue d'un déplacement du corps pendulaire depuis la position de repos et/ou en cas de chute radiale du corps pendulaire, par exemple lors de l'arrêt du moteur thermique du véhicule. De tels organes d'amortissement de butée sont notamment utiles pour de faibles régimes de transition, par exemple entre 400 et 500 tr/min, dans lesquels les masselottes pendulaires cessent d'être centrifugées. Chaque organe d'amortissement de butée est par exemple disposé radialement entre le bord radialement intérieur de l'organe de liaison et le bord radialement intérieur de la fenêtre.

L'invention a encore pour objet, selon un autre de ses aspects, un convertisseur de couple hydrodynamique pour système de transmission d'un véhicule automobile, comprenant :
- un volume recevant du liquide, et
- un dispositif d'amortissement d'oscillations de torsion, tel que défini ci-dessus, et disposé dans ce volume.

Le dispositif d'amortissement de torsion est par exemple le batteur ou le pendule mentionné précédemment.

Le support du dispositif d'amortissement d'oscillations de torsion peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention pourra être mieux comprise à la lecture qui va suivre d'exemples non limitatifs de mise en oeuvre de celle-ci et à l'examen du dessin annexé sur lequel :
- la figure 1 représente de façon schématique et partielle un dispositif d'amortissement d'oscillations de torsion auquel peut être intégrée l'invention,
- la figure 2 représente un détail de la figure 1,
- la figure 3 représente un support et un corps pendulaire selon un exemple de mise en oeuvre de l'invention, l'une des masselottes pendulaires du corps pendulaire étant représentée à distance du support et inversée,
- les figures 4 et 5 sont des vues différentes du support et du corps pendulaire de la figure 3, et
- la figure 6 représente un autre exemple de dispositif d'amortissement d'oscillations de torsion auquel peut être intégrée l'invention selon les figures 3 à 5, et
- la figure 7 représente un autre exemple de dispositif d'amortissement d'oscillations de torsion non couvert par les revendications mais utile à la compréhension de l'invention.

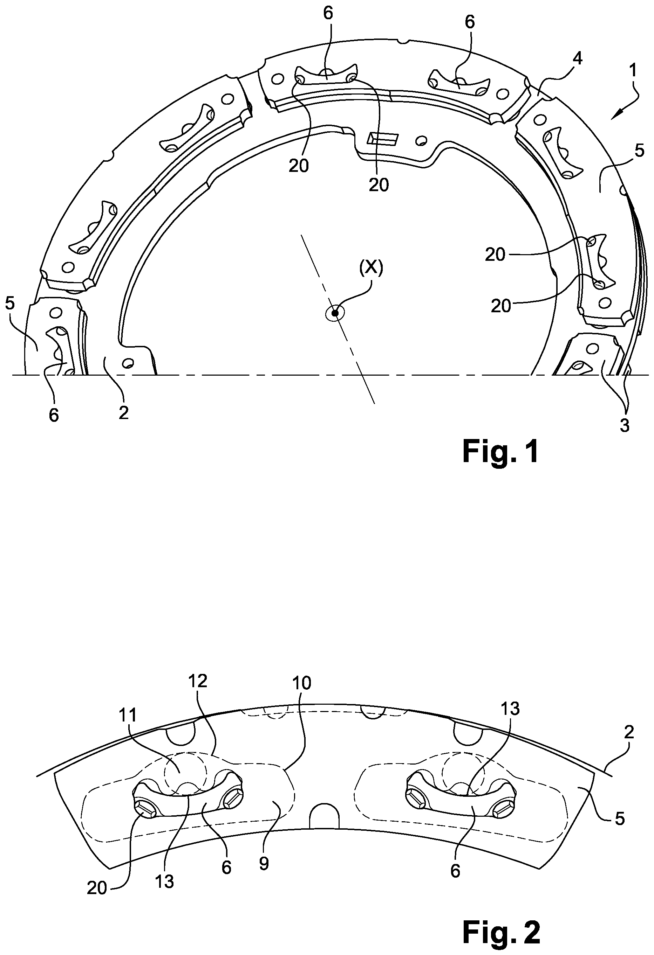

On a représenté sur la figure 1 un dispositif d'amortissement 1 d'oscillations de torsion. Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant dans l'exemple décrit un convertisseur de couple hydrodynamique. Le dispositif 1 est ainsi reçu dans un volume contenant de l'huile.

Ce composant fait ici partie d'une chaîne de propulsion d'un véhicule automobile, cette dernière comprenant un moteur thermique notamment à trois ou quatre cylindres.

Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, six corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment une rondelle de guidage ou une rondelle de phasage. En variante, le support 2 est un flasque du composant.

Dans l'exemple considéré, le support 2 présente globalement une forme d'anneau comportant deux côtés opposés 4 qui sont ici des faces planes.

Comme on le devine sur la figure 1, chaque corps pendulaire 3 comprend dans l'exemple considéré :
- deux masselottes pendulaires 5, chaque masselotte pendulaire 5 s'étendant axialement en regard d'un côté 4 du support 2, et
- deux organes de liaison 6 solidarisant les deux masselottes pendulaires 5.

Chaque masselotte pendulaire 5 présente ainsi une face 7 disposée axialement en regard d'un côté 4 du support 2 et une face 8, opposée à la face 7.

Les organes de liaison 6, encore appelés « entretoises », sont dans l'exemple considéré décalés angulairement.

Chaque organe de liaison 6 s'étend en partie dans une fenêtre 9 ménagée dans le support 2. Dans l'exemple considéré, la fenêtre 9 définit un espace libre à l'intérieur du support, cette fenêtre étant délimitée par un contour fermé 10. Chaque organe de liaison 6 est solidarisé à chaque masselotte pendulaire 5 en étant par exemple emmanché en force dans une ouverture 18 ménagée dans ladite masselotte pendulaire 5.

Le dispositif 1 comprend encore dans l'exemple considéré des organes de roulement 11, visibles sur la figure 2 par exemple, et guidant le déplacement des corps pendulaires 3 par rapport au support 2. Les organes de roulement 11 sont ici des rouleaux présentant une section transversale circulaire.

Dans l'exemple décrit, le mouvement par rapport au support 2 de chaque corps pendulaire 3 est guidé par deux organes de roulement 11, chacun d'entre eux coopérant avec l'un des organes de liaison 6 de la masse pendulaire 3.

Chaque organe de roulement 11 coopère d'une part avec une piste de roulement 12 définie par le support 2, et qui est ici formée par une partie du contour 10 de la fenêtre 9 ménagée dans le support, et d'autre part avec une piste de roulement 13 définie par le corps pendulaire 3, et qui est ici formée par une partie du contour extérieur de l'organe de liaison 6. La piste de roulement 13 est ici de forme concave.

Plus précisément, chaque organe de roulement 11 interagit au niveau radialement intérieur avec la piste de roulement 13 et au niveau radialement extérieur avec la piste de roulement 12 lors de son déplacement par rapport au support 2 et au corps pendulaire 3, étant par exemple uniquement sollicité en compression entre les pistes de roulement 12 et 13 mentionnées précédemment.

Comme on peut le voir sur la figure 2, le dispositif 1 peut également comprendre des organes d'amortissement de butée 20 aptes à venir simultanément en contact avec un organe de liaison 6 et avec le support 2 dans certaines positions relatives du support 2 et des corps pendulaires 3, telles que les positions de venue en butée à l'issue d'un débattement depuis la position de repos. Chaque organe d'amortissement de butée 20 est ici solidaire d'un corps pendulaire 3, étant monté sur chaque masselotte pendulaire et disposé de manière à s'interposer radialement entre l'organe de liaison 6 et le contour 10 de l'ouverture 9.

Le dispositif 1 comprend encore des moyens assurant un contact axial entre des masselottes pendulaires 5 d'un corps pendulaire 3 et le support 2. Seules certains corps pendulaires 3 peuvent présenter ces moyens de contact axial. En variante, tous les corps pendulaires 3 présentent ces moyens de contact axial.

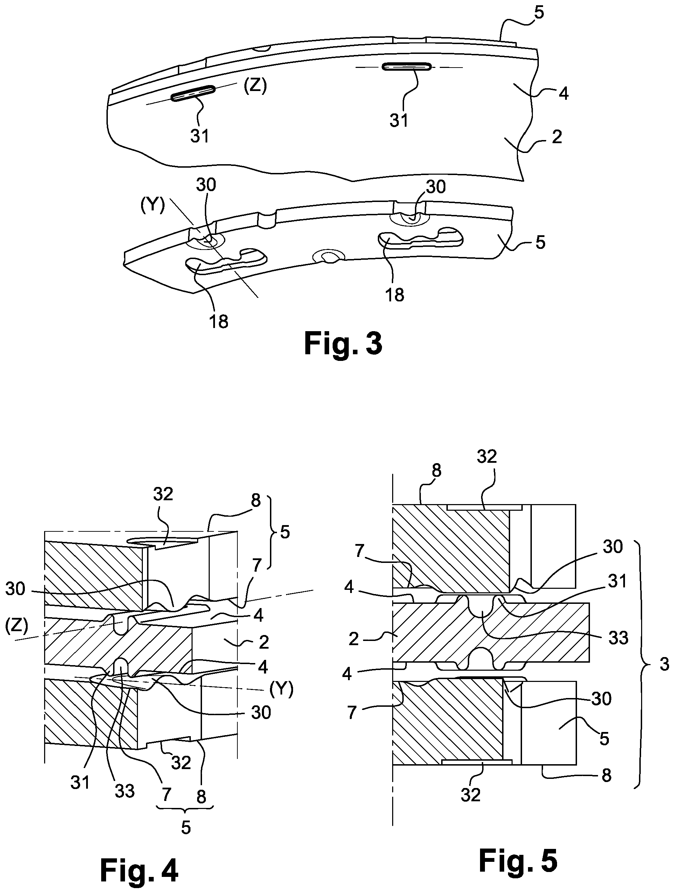

Ces moyens de contact axial comprennent pour chaque couple support 2 / masselotte pendulaire 5 représenté sur les figures 3 à 5:
- deux premiers reliefs 30 portés par la masselotte pendulaire 5, et
- deux deuxièmes reliefs 31 portés par le support 2.

Les premiers reliefs 30 sont portés par la face 7 de la masselotte pendulaire et espacés angulairement tandis que les deuxièmes reliefs 31 sont portés par le côté 4 du support 2 axialement en regard de la face 7 de la masselotte pendulaire 5 et espacés angulairement. Chaque premier relief 30 coopère ici uniquement avec un deuxième relief 31, et réciproquement.

Afin de former les moyens de contact axial, le premier relief 30 et le deuxième relief 31 sont aptes à venir en contact l'un avec l'autre lors du déplacement de la masselotte pendulaire 5 par rapport au support 2, faisant saillie axialement en direction de l'autre.

Dans l'exemple considéré, la masselotte pendulaire 5 se déplace autour de l'axe X sur un secteur angulaire donné, et le deuxième relief 31 est ménagé sur le côté 4 du support sur seulement une partie de ce secteur angulaire donné.

Ces reliefs 30 et 31 assurent dans l'exemple décrit un contact entre la masselotte pendulaire 5 et le support 2 pour plusieurs positions relatives de ces dernières.

Chaque premier relief 30 est par exemple obtenu par emboutissage d'une masselotte pendulaire 5. La saillie axiale formée par le premier relief sur la face 7 correspond alors à un creux 32 dans la face opposée 8 de la masselotte pendulaire 5.

Dans l'exemple considéré, le premier relief 30 s'étend de façon continue et de façon rectiligne selon un axe Y orienté sensiblement radialement. Le deuxième relief 31 s'étend de façon continue et de façon rectiligne, selon un axe Z orienté sensiblement orthoradialement. Chaque contact de la masselotte pendulaire 5 avec le support 2 s'effectue alors entre un premier 30 et un deuxième 31 relief qui sont orientés selon des axes Y et Z sécants entre eux. Parmi les positions de contact de la masselotte pendulaire 5 avec le support 2, il peut en exister une pour laquelle les axes Y et Z sont perpendiculaires.

Comme représenté, le premier relief 30 est ici une nervure tandis que le deuxième relief 31 comprend ici deux nervures entre lesquelles est ménagée une rainure 33. La rainure 33 forme ainsi un canal pour l'huile. Ce canal s'étend alors orthoradialement.

Comme on peut le voir sur les figures 4 et 5, chaque côté 4 du support 2 peut présenter un tel deuxième relief 31 formant un canal 33, et chaque relief 31 peut coopérer avec un premier relief 30 formé sur une face 7 d'une masselotte pendulaire 5 du masse pendulaire 3.

L'invention n'est pas limitée à l'exemple qui vient d'être décrit.

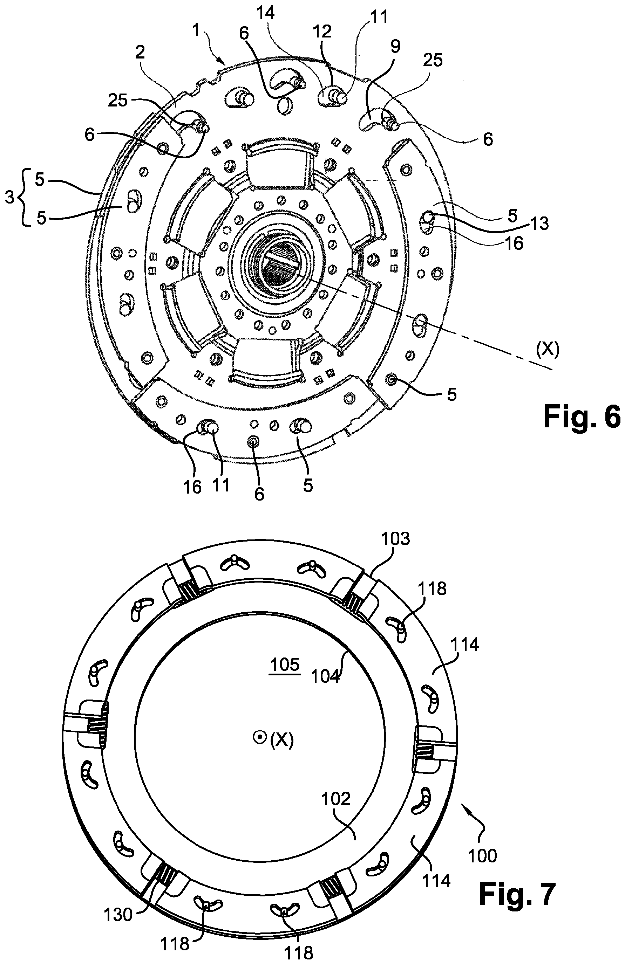

Des moyens de contact axial tels que décrits en référence aux figures 3 à 5 peuvent encore être intégrés au dispositif d'amortissement de torsion de type pendulaire représenté sur la figure 6. Ce dispositif 1 diffère de celui qui vient d'être décrit par le fait que les organes de liaison 6 et les pistes de roulement 12 et 13 sont autres. Les organes de liaison 6 sont ici des rivets, et chaque rivet 6 s'étend selon un axe qui est, dans l'exemple considéré, parallèle à l'axe de rotation X. Chaque organe de liaison 6 s'étend en partie dans une fenêtre 9 ménagée dans le support.

Toujours selon l'exemple de la figure 6, chaque organe de roulement 11 coopère d'une part avec une piste de roulement 12 définie par le support 2, et qui est ici formée par une partie du bord d'une cavité 14 ménagée dans le support 2 et distincte de la fenêtre 9, et d'autre part avec deux pistes de roulement 13 définies par la masse pendulaire 3. Chaque masselotte pendulaire 5 de la masse pendulaire présente ici, pour chaque organe de roulement 11, une cavité 16 dont une partie du bord définit une piste de roulement 13.

Selon cet exemple, chaque organe de roulement 11 comprend successivement axialement:
- une portion disposée dans une cavité 16 de la première masselotte pendulaire 5 et coopérant avec la piste de roulement 13 formée par une partie du bord de cette cavité 16,
- une portion disposée dans une cavité 14 du support 2 et coopérant avec la piste de roulement 12 formée par une partie du bord de cette cavité 14, et
- une portion disposée dans une cavité 16 de la deuxième masselotte pendulaire 5 et coopérant avec la piste de roulement 13 formée par une partie du bord de cette cavité 16.

Des moyens de contact axial tels que décrits en référence aux figures 3 à 5 peuvent également être appliqués à un batteur intégré à un convertisseur de couple hydrodynamique.

La figure 7 représente un exemple d'un tel batteur 100. Le batteur 100 comprend un support 102 mobile en rotation autour d'un axe X. Ce support 102 comprend dans l'exemple considéré dans un plan perpendiculaire à l'axe X un contour radialement extérieur 103 sensiblement circulaire, et un contour radialement intérieur 104 sensiblement circulaire également.

Le support 102 comprend en son centre une zone vide 105 permettant le passage d'un arbre de la chaîne de propulsion. Cette zone vide 105 est délimitée extérieurement par le contour radialement intérieur 104 du support 102.

Le dispositif 100 comprend une pluralité de masses 114 mobiles par rapport au support 102. Dans l'exemple décrit, six masses 114 sont prévues. Ces masses 114 se succèdent les unes les autres lorsque l'on se déplace autour de l'axe X. Chaque masse 114 comprend deux masselottes distinctes, l'une des masselottes s'étendant axialement d'un premier côté du support et l'autre masselotte s'étendant axialement d'un deuxième côté du support, opposé au premier côté. Ainsi, le support 102 est localement axialement compris entre les deux masselottes d'une masse 114. Les premiers et deuxièmes reliefs selon l'invention permettent alors un contact entre masselotte(s) et support 102.

Les deux masselottes d'une même masse 114 sont dans l'exemple décrit reliées entre elles par l'intermédiaire d'organes de liaison 118 qui sont ici des rivets. Les rivets 118 peuvent ou non être rigidement couplés à chaque masselotte.

Dans l'exemple considéré, deux rivets 118 sont associés à chaque masse 114.

Le dispositif 100 comprend encore une pluralité d'organes de rappel élastique 130, chaque organe de rappel élastique 130 étant interposé entre deux masses adjacentes 114.

L'invention n'est pas limitée aux exemples qui viennent d'être décrits.

## Revendications

1. Dispositif d'amortissement d'oscillations de torsion (1) pour convertisseur de couple hydrodynamique, comprenant :
- un support (2) mobile en rotation autour d'un axe (X), et
- au moins une masse (5) mobile par rapport au support (2), le déplacement de la masse (5) par rapport au support (2) étant guidé, et la masse (5) étant axialement décalée par rapport au support (2),
la masse (5) portant au moins un premier relief (30) et le support (2) portant au moins un deuxième relief (31),
la masse (5) est disposée d'un côté du support (2) et appariée via au moins un organe de liaison (6) à une masse disposée de l'autre côté du support (2) de manière à former un corps pendulaire, le déplacement par rapport au support (2) de ce corps pendulaire (3) étant guidé par un organe de roulement (11),
**caractérisé en ce que**
le premier (30) et le deuxième reliefs (31) étant aptes à venir en contact l'un avec l'autre lors du déplacement de la masse (5) par rapport au support (2) de manière à établir un contact axial entre la masse (5) et le support (2).

2. Dispositif selon la revendication 1, le premier (30) et le deuxième (31) reliefs étant ménagés sur la masse (5) et sur le support (2) de telle sorte que, pour au moins une position de la masse (5) par rapport au support (2) dans laquelle le premier relief (30) et le deuxième relief (31) sont en contact l'un avec l'autre, ce contact s'effectue entre des portions respectives du premier relief (30) et du deuxième relief (31) s'étendant respectivement selon un axe (Y, Z), ces deux axes (Y, Z) étant sécants.

3. Dispositif selon la revendication 1 ou 2, le premier (30) et le deuxième reliefs (31) étant ménagés sur la masse (5) et le support (2) de telle sorte que, pour toute position de la masse (5) par rapport au support (2) dans laquelle la masse (5) est en contact axial avec le support (2), le premier relief (30) et le deuxième relief (31) soient en contact l'un avec l'autre via des portions respectives du premier relief (30) et du deuxième relief (31) s'étendant respectivement selon un axe (Y, Z), ces deux axes (Y, Z) étant sécants.

4. Dispositif selon l'une quelconque des revendications 1 à 3, l'axe (Y) selon lequel s'étend ladite portion du premier relief (30) et l'axe (Z) selon lequel s'étend ladite portion du deuxième relief (31) étant perpendiculaires.

5. Dispositif selon l'une quelconque des revendications 1 à 4, le déplacement de la masse (5) étant guidé de manière à ce que cette dernière décrive une trajectoire donnée sur un secteur angulaire limité autour de l'axe de rotation (X), et le deuxième relief (31) s'étendant sur tout ou partie de ce secteur angulaire limité.

6. Dispositif selon l'une quelconque des revendications 1 à 5, l'un du premier (30) et du deuxième (31) relief étant une nervure et l'autre du premier et du deuxième relief étant formé par deux nervures entre lesquelles est ménagée une rainure (33).

7. Dispositif selon les revendications 5 et 6, la rainure (33) s'étendant selon la trajectoire de la masse (5), sur tout ou partie de ce secteur angulaire limité.

8. Dispositif selon l'une quelconque des revendications précédentes, comprenant au moins une autre masse (5) mobile par rapport au support (2) et dont le déplacement par rapport au support est guidé, le support (2) et l'autre masse (5) étant dépourvus de premier relief et de deuxième reliefs permettant un contact axial entre cette autre masse (5) et le support (2), notamment un contact axial via des portions respectives du premier relief et du deuxième relief s'étendant respectivement selon un axe, ces deux axes étant sécants.

9. Convertisseur de couple hydrodynamique pour système de transmission d'un véhicule automobile, comprenant :
- un volume recevant du liquide, et
- un dispositif d'amortissement d'oscillations de torsion (1) selon l'une quelconque des revendications précédentes, et disposé dans ce volume.

## Patentansprüche

1. Vorrichtung zur Torsionsschwingungsdämpfung (1) für hydrodynamischen Drehmomentwandler, umfassend:
- einen um eine Achse (X) drehbar beweglichen Träger (2), und
- mindestens eine relativ zum Träger (2) bewegliche Masse (5), wobei die Verlagerung der Masse (5) relativ zum Träger (2) geführt ist und die Masse (5) relativ zum Träger (2) axial versetzt ist,
wobei die Masse (5) mindestens ein erstes Relief (30) aufweist und der Träger (2) mindestens ein zweites Relief (31) aufweist,
wobei die Masse (5) auf einer Seite des Trägers (2) angeordnet ist und über mindestens ein Verbindungselement (6) mit einer Masse gepaart ist, die derart auf der anderen Seite des Trägers (2) angeordnet ist, dass ein Pendelkörper gebildet wird, wobei die Verlagerung relativ zum Träger (2) des Pendelkörpers (3) von einem Rollelement (11) geführt ist,
**dadurch gekennzeichnet, dass** das erste (30) und das zweite (31) Relief fähig sind, bei der Verlagerung der Masse (5) relativ zum Träger (2) derart in Berührung miteinander zu kommen, dass eine axiale Berührung zwischen der Masse (5) und dem Träger (2) hergestellt wird.

2. Vorrichtung nach Anspruch 1, wobei das erste (30) und das zweite (31) Relief auf der Masse (5) und auf dem Träger (2) derart bereitgestellt sind, dass für mindestens eine Position der Masse (5) relativ zum Träger (2), in der das erste Relief (30) und das zweite Relief (31) in Berührung miteinander sind, die Berührung zwischen dem jeweiligen Abschnitt des ersten Reliefs (30) und des zweiten Reliefs (31) stattfindet, der sich entlang einer jeweiligen Achse (Y, Z) erstreckt, wobei die zwei Achsen (Y, Z) einander schneidend sind.

3. Vorrichtung nach Anspruch 1 oder 2, wobei das erste (30) und das zweite (31) Relief auf der Masse (5) und dem Träger (2) derart bereitgestellt sind, dass für jede Position der Masse (5) relativ zum Träger (2), in der die Masse (5) in axialer Berührung mit dem Träger (2) ist, das erste Relief (30) und das zweite Relief (31) über einen jeweiligen Abschnitt des ersten Reliefs (30) und des zweiten Reliefs (31), der sich entlang einer jeweiligen Achse (Y, Z) erstreckt, wobei die zwei Achsen (Y, Z) einander schneidend sind, in Berührung miteinander sind.

4. Vorrichtung nach einem der Ansprüche 1 bis 3, wobei die Achse (Y), entlang der sich der Abschnitt des ersten Reliefs (30) erstreckt, und die Achse (Z), entlang der sich der Abschnitt des zweiten Reliefs (31) erstreckt, senkrecht zueinander sind.

5. Vorrichtung nach einem der Ansprüche 1 bis 4, wobei die Verlagerung der Masse (5) derart geführt ist, dass sie in einem beschränkten Winkelbereich um die Drehachse (X) eine vorgegebene Bewegungsbahn beschreibt, und sich das zweite Relief (31) über den gesamten oder einen Teil des beschränkten Winkelbereichs erstreckt.

6. Vorrichtung nach einem der Ansprüche 1 bis 5, wobei eines vom ersten (30) und zweiten (31) Relief eine Rippe ist und das andere vom ersten und zweiten Relief durch zwei Rippen gebildet ist, zwischen denen eine Rille (33) bereitgestellt ist.

7. Vorrichtung nach den Ansprüchen 5 und 6, wobei sich die Rille (33) entlang der Bewegungsbahn der Masse (5), über den gesamten oder einen Teil des beschränkten Winkelbereichs erstreckt.

8. Vorrichtung nach einem der vorhergehenden Ansprüche, umfassend mindestens eine weitere relativ zum Träger (2) bewegliche Masse (5), deren Verlagerung relativ zum Träger geführt ist, wobei der Träger (2) und die weitere Masse (5) kein erstes Relief und kein zweites Relief aufweisen, die eine axiale Berührung zwischen der weiteren Masse (5) und dem Träger (2) ermöglichen, insbesondere eine axiale Berührung über einen jeweiligen Abschnitt des ersten Reliefs und des zweiten Reliefs, der sich entlang einer jeweiligen Achse erstreckt, wobei die zwei Achsen einander schneidend sind.

9. Hydrodynamischer Drehmomentwandler für ein Getriebesystem eines Kraftfahrzeugs, umfassend:
- einen Raum, der Flüssigkeit aufnimmt, und
- eine Vorrichtung zur Torsionsschwingungsdämpfung (1) nach einem der vorhergehenden Ansprüche, die in dem Raum angeordnet ist.

## Claims

1. Device for damping torsional oscillations (1) for a hydrodynamic torque convertor, comprising:
- a support (2) that is rotationally mobile about an axis (X), and
- at least one weight (5) that is mobile relative to the support (2), the displacement of the weight (5) relative to the support (2) being guided, and the weight (5) being axially offset relative to the support (2),
the weight (5) bearing at least one first relief (30) and the support (2) bearing at least one second relief (31), the weight (5) is arranged on one side of the support (2) and paired via at least one link member (6) with a weight arranged on the other side of the support (2) so as to form a pendular body, the displacement relative to the support (2) of this pendular body (3) being guided by a rolling member (11),
**characterized in that**
the first (30) and the second (31) reliefs being able to come into contact with one another upon the displacement of the weight (5) relative to the support (2) so as to establish an axial contact between the weight (5) and the support (2).

2. Device according to Claim 1, the first (30) and the second (31) reliefs being formed on the weight (5) and on the support (2) such that, for at least one position of the weight (5) relative to the support (2) in which the first relief (30) and the second relief (31) are in contact with one another, this contact is made between respective portions of the first relief (30) and of the second relief (31) extending respectively along an axis (Y, Z), these two axes (Y, Z) being secant.

3. Device according to Claim 1 or 2, the first (30) and the second (31) reliefs being formed on the weight (5) and the support (2) such that, for any position of the weight (5) relative to the support (2) in which the weight (5) is in axial contact with the support (2), the first relief (30) and the second relief (31) are in contact with one another via respective portions of the first relief (30) and of the second relief (31) extending respectively along an axis (Y, Z), these two axes (Y, Z) being secant.

4. Device according to any one of Claims 1 to 3, the axis (Y) along which said portion of the first relief (30) extends and the axis (Z) along which said portion of the second relief (31) extends being at right angles.

5. Device according to any one of Claims 1 to 4, the displacement of the weight (5) being guided in such a way that the latter describes a given trajectory over a limited angular segment about the axis of rotation (X), and the second relief (31) extending over all or part of this limited angular segment.

6. Device according to any one of Claims 1 to 5, one of the first (30) and of the second (31) reliefs being a rib and the other of the first and of the second reliefs being formed by two ribs between which is formed a groove (33) .

7. Device according to Claims 5 and 6, the groove (33) extending along the trajectory of the weight (5), over all or part of this limited angular segment.

8. Device according to any one of the preceding claims, comprising a least one other weight (5) that is mobile relative to the support (2) and whose displacement relative to the support is guided, the support (2) and the other weight (5) having no first relief and second reliefs allowing an axial contact between this other weight (5) and the support (2), in particular an axial contact via respective portions of the first relief and of the second relief extending respectively along an axis, these two axes being secant.

9. Hydrodynamic torque convertor for a transmission system of a motor vehicle, comprising:
- a volume receiving liquid, and
- a device for damping torsional oscillations (1) according to any one of the preceding claims, and arranged in this volume.
